# EUROPEAN PATENT SPECIFICATION

(11) **EP 1 737 189 B1**
(45) Date of publication and mention of the grant of the patent: **21.04.2010**
(21) Application number: 06253214.8
(22) Date of filing: 21.06.2006
(51) Int. Cl.: H04L 29/06

(54) **Apparatus and method for mitigating denial of service attacks on communication appliances**
Vorrichtung und Verfahren zur Verringerung von Denial-of-service Angriffen in Kommunikationsgeräten
Dispositif et procédé pour atténuer des attaques de deni de service sur des appareils de communication

(30) Priority: 21.06.2005 US 157880
(43) Date of publication of application: 27.12.2006
(73) Proprietor: Avaya Inc., Basking Ridge, New Jersey 07920 (US)
(72) Inventor: Garg, Sachin, Green Brook, New Jersey 08812 (US); Singh, Navjot, Denville, New Jersey 07834 (US)
(74) Representative: Williams, David John

(56) References cited:
- EP-A- 1 533 977
- WO-A-02/103982
- WO-A2-02/100062
- US-A1- 2002 138 643
- S. GARG, N. SINGH: "Efficient embedded firewall for communication appliances"[Online] 29 June 2005 (2005-06-29), XP002402211 Retrieved from the Internet: URL:http://pubs.research.avayalabs.com/pdf s/ALR-2005-001-external-paper.pdf> [retrieved on 2006-10-06]
- BRUSCHI D ET AL: "S-ARP: a secure address resolution protocol" COMPUTER SECURITY APPLICATIONS CONFERENCE, 2003. PROCEEDINGS. 19TH ANNUAL 8-12 DEC. 2003, PISCATAWAY, NJ, USA,IEEE, 8 December 2003 (2003-12-08), pages 66-74, XP010673780 ISBN: 0-7695-2041-3
- CISCO: "Configuring Dynamic ARP Inspection" CISCO, [Online] 30 March 2005 (2005-03-30), XP002418440 Retrieved from the Internet: URL:http://web.archive.org/web/20050330214 334/http://www.cisco.com/univercd/cc/td/do c/product/lan/cat3560/12220se/3560scg/swdy narp.pdf> [retrieved on 2007-02-05]

## Description

### BACKGROUND OF THE INVENTION

The present invention relates to an apparatus and method for countering Denial-of-Service attacks in Communication Appliances and specifically for appliances which deploy Voice over Internet Protocol.

Voice over Internet Protocol (VolP) relates to the transmission of voice or speech over data-style packet-switched networks, i.e., the Internet. An advantage of VolP is that a user making a call is typically not charged beyond the Internet access charge, thereby making VolP an attractive option for long distance calls. A typical VolP deployment includes media gateways, media gateway controllers, end-user communication devices and many other support servers such as, for example, DNS, DHCP, and FTP. Media gateways, media gateway controllers and VolP end-devices exchange the VolP signaling/control and media packets. Many different types of end-user communication appliances implement VolP including traditional telephone handsets, conferencing units, mobile phones, Personal Digital Assistants (PDAs) and desktop and mobile computers.

Denial-of-Service attacks are becoming a concern in viable VolP deployments. Non-specific viruses, worms and Trojans as well as targeted VolP Denial-of-Service (DoS) attacks can disrupt the service by either degrading the performance of IP end-points and/or media servers and gateways or by bringing them down altogether. The malicious packet flood, upon reaching these VolP infrastructure elements consume network and/or host resources such as central processing units (CPU) and memory to the extent that the host device is unable to process legitimate packets resulting in service disruption. Phones deploying VolP ("IP-phones") and other lightweight devices are especially susceptible to such attacks because of the inherent imbalance in network and processor resources. For instance, in an IP Phone, the network interface is typically 10/100 Mbps Ethernet whereas the CPU is an Advanced RISC Machine (ARM) or Microprocessor without Interlocked Pipeline Stages (MIPS) type processor meant for embedded systems. To contain the costs, the CPUs have fairly low horsepower (i.e., low processing power).

Currently, firewalls are used in the network infrastructure, mostly at the periphery of the network (the technique is called perimeter protection) to prevent and/or rate-limit malicious packets from reaching servers and the end-points. However, this alone is not sufficient to prevent DoS attacks on VolP, as it takes very little network traffic to disrupt a VolP end-point. Setting bandwidth limits at very low levels at the perimeter of the network also prevents legitimate traffic from reaching the devices. Therefore, a complementary and viable approach is to filter illegitimate traffic at the device itself in addition to the network perimeter. In other words, each device needs an efficient embedded firewall to be resilient against flooding based DoS attacks. The core of any firewall is the packet-classification engine. There are two conflicting dimensions to the performance of a packet classifier, time and space. A large body of research has been devoted to understanding the trade-offs between time and space complexity of the packet classification problem. Typical packet classification is done on a limited set of header fields in a packet. The fields, associated values and the firewall action (drop/forward) are specified as rules, which the classification engine takes as input.

Packet classification is a core technology used in infrastructure elements such as routers, switches, and firewalls. The goal of these elements is to process/forward as much traffic as they can at wire speeds up to the backplane capacity. In other words, the efficiency of packet classification should be such that it should not be the bottleneck in packet forwarding while still being able to support a large number of rules.

WO 02/103982 discloses a technique for protecting a first network from unauthorised access including storing profile information for each call session, and determining if an unauthorised access of the first network is occurring based on the profile information. The profile information includes a predetermined threshold indicating a maximum acceptable rate of incoming data units from an external network to the first network. If the incoming data unit rate exceeds the predetermined threshold, then a security action is taken, such as generating an alarm or preventing further transport of data units from the external network to the first network.

US 2002/0138643 discloses a technique for controlling network traffic to a network computer such as a server, wherein such control is provided based on a measured capacity of the server to service the network traffic and rule data which represents different policies for servicing the network traffic.

EP-A-1533977 discloses a technique directed to detecting denial of service attacks against SIP enabled devices.

Accordingly, the primary design goals for packet classifiers have been scalability and speed traded off against memory space needed. While a simple linear search takes O(n) storage, its time complexity is also O(n), which is not appropriate for efficient processing of a large number of rules. The techniques for efficient packet classification can be divided broadly into four categories: algorithmic; heuristic; hardware assisted; and special cases.

### SUMMARY OF THE INVENTION

An object of the present invention is to provide an apparatus and method for protecting a communication appliance against Denial-of-Service attacks.

Assuming that the communication appliance is a unit cycle device and that the device needs X cycles to process peak, valid load then 1 ― X cycles are left to classify and filter all arriving packets. If the classification and filtering mechanism ensures that it can correctly handle a packet rate which is less than or equal to the upper bound on ingress packet rate within 1―X cycles, then the communication appliance can sustain any flooding based DoS attack up to the limit of the network pipe. Therefore, another object of the invention is to design a device-based efficient firewall which meets the above condition for withstanding a flooding-based DoS attack.

The object is met by a method in accordance with claim 1.

The determination of whether conditions indicating a Denial-of-Service request are present includes determining whether a rate of ingress exceeds a threshold rate. The communication appliance may have a plurality of operating states having different maximum legitimate packet ingress rates. The threshold rate may be varied based on a current operating state of the communication appliance. The threshold rate may be further dependent on whether the received traffic is periodic, features used by the communication appliance, an inherent packet rate transmitted by the sender, and/or network latency and jitter.

There is also provided an apparatus according to claim 6.

A firewall may be arranged in the communication appliance and configured for performing the above described method. The communication appliance may be an IP-phone, conference unit, computer, or any other appliance capable of VolP communications.

Other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### BRIEF DESCRIPTION OF THE DRAWINGS

In the drawings:
Fig. 1 is a schematic diagram of a network in which the present invention may be implemented;
Fig. 2 is a flow diagram of a method according to an embodiment of the present invention;
Fig. 3 is a table listing the ports and protocols used by an IP-phone;
Fig. 4 is a diagram depicting various operating states of an IP-phone;
Fig. 5 is a table listing ports and protocols used in each operating state of an IP-phone; and
Fig. 6 is a table listing average packet ingress rates during each operating state of an IP-phone.

### DETAILED DESCRIPTION OF THE PRESENTLY PREFERRED EMBODIMENTS

Current VolP systems use either a proprietary protocol or one of two standards, H.323 and Session Initiation Protocol (SIP). The implementation of the present invention is described below using an H.323 based IP phone example. However, the generic solution described below may be implemented in communication appliances in any of the different VolP systems.

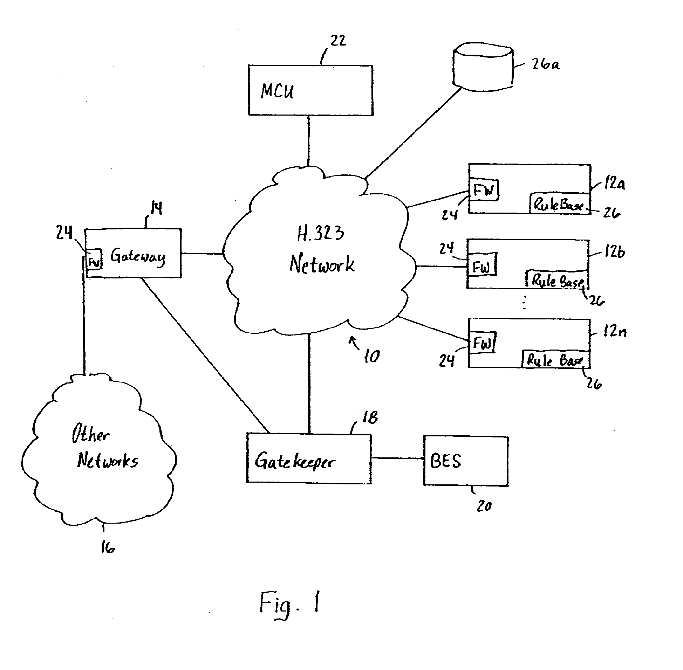

The H.323 standard is specified by International Telecommunication Union (Telecommunications Sector). An example of an H.323 network 10 is shown in Fig. 1. The H.323 network 10 is connected to terminals or communication appliances 12a-12n. Although three appliances are shown in Fig. 1, the H.323 network may have one or more appliances. The communication appliances 12a-12n may comprise traditional telephone handsets, conferencing units, mobile phones, and desktop or mobile computers ("softphones").

The H.323 network 10 is also connected to a gateway 14 which connects the H.323 network to a non-H.323 network 16 such as, for example, an ISDN or PSTN. A gatekeeper 18 provides address translation and bandwidth control for the appliances 12a-12n connected to the H.323 network 10. A Back End Service (BES) 20 is connected to the gatekeeper and comprises a database which maintains data about the appliances 12a-121n, including permissions, services, and configurations. A Multi-point Control Unit (MCU) 22 is an optional element of the H.323 network which facilitates communication between more than two terminals.

The gateway 14 may be decomposed into one or more media gateways (MGs) 14a and a media gateway controller (MGCs) 14b. The MGC 14b handles the signaling data between MGs 14a and other network components such as the gatekeeper 18 or towards SS7 signaling gateways. MGs 14a focus on the audio signal translation function.

A firewall 24 is embedded in a communication appliance 12a-12n to prevent Denial-of-Service (DoS) attacks to that appliance. A firewall is also embedded in the gateway 14 to similarly prevent DoS attacks to the gateway 14. Each firewall 24 includes a packet classification engine for filtering packets received at the communication appliances. The firewall 24 utilizes rules in a packet-classification rule base 26 to determine whether an incoming packet should be forwarded to the respective communication appliance 12a-12n. The firewall thus prevents malicious packets from reaching and/or limits the rate at which malicious packets reach the communication appliances.

As discussed in more detail below, the packet classification rule base 26 is administered by a network administrator. The packet classification rule base 26 may be connected directly to each communication appliance 12a-12n as shown in Fig. 1. Alternatively, a central packet classification rule base 26a may be connected to the H.323 network which is accessible by all firewalls 24.

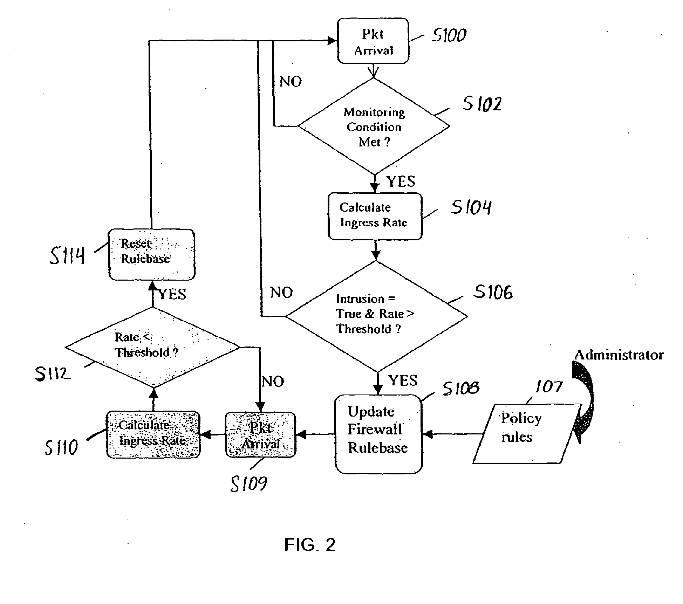

The overall method for efficient filtering of packets for communication appliances according to the present invention is shown in Fig. 2. The method may be software implemented in the firewall 24. Moreover, the entire firewall 24 may be software implemented utilizing the processor of the communication appliance. Alternatively, the firewall 24 may comprise a separate hardware component having its own processor connected to the communication appliance. According to the invention, each packet arrival at the firewall 24, step S100, marks an event as shown in Fig. 2. A simple time based or packet count based condition is evaluated at each packet arrival, step S102. If the condition in step S102 is met, then the packet ingress rate is calculated, step S104. If the calculated ingress rate is determined to be higher than a predetermined threshold and a DoS attack detection condition is determined to be met in step S106, then the rules utilized by the firewall 24 are changed, step S108, in accordance with policy rules 107 administered by a human operator. If either of the two conditions in step S106 is unfulfilled, the control flow returns to the initial state. Once the rule-base is changed in step S108, only critical traffic determined by the policy rules is allowed to reach the communication appliance. The remainder of the traffic is discarded. The rule-base update in step S108 reduces number of rules applied to each packet, thereby enabling the communication appliance 12 to tolerate a DoS flooding attack without the CPU of the communication appliance becoming overwhelmed. In this degraded state, subsequent packet arrivals, step S109, are monitored to determine ingress rate, step S110, and to determine when the DoS intrusion ends, step S112. Once the packet ingress rate falls below the established threshold, the rule-base is reset to its original state, step S114, where all legitimate traffic is allowed to reach the communication appliance. The control flow then returns to the initial state.

The parameters of the detection conditions in steps S102 and S106 may be based on a simple heuristic, an example of which is described below for normal, in-call state of an H.323 based IP-phone. During the in-call state of an H.323 based IP-phone, real-time transfer protocol (RTP), real-time control protocol (RTCP) and H.225 (call signaling) heartbeats between the IP phone and the server constitute periodic traffic received at the IP-phone, of which, the RTP flow consumes the most bandwidth. Assuming 20 millisecond audio payload per packet, a periodic stream of packets using the codec for G.711 (the ITU-T recommendation for audio coding at 64 kbps) produces a receive rate of 50 packets per second. It is possible for these packets to get queued in-transit and then released causing the rate to artificially exceed 50 packets/sec for a limited period. This must be taken into account when determining the granularity of measuring ingress rate and determining when the filtering-policy is to be put into affect by updating the rule-base. While calculating the ingress rate each time a packet is received is possible, this frequency of calculation is a large drain on CPU availability. However, calculating the ingress rate every so-many received packets would result in the loss of some accuracy. The QoS guidelines for VolP traffic help determine the optimal interval for calculating ingress rate. The G.711 codec can typically deliver acceptable call quality with less than 150 milliseconds delay, and less than 2% loss. This implies that any intrusion that lasts less than 150 milliseconds will not have perceptible effect on call quality. In other words, a suitable rate monitoring interval is less than 150 milliseconds. Similarly, once the packet ingress rate is determined to be higher than the established threshold, the filtering policy may take 150 milliseconds (from the start of the attack) to take affect before call quality suffers. Therefore, a reasonable heuristic may be to monitor every 50 milliseconds and have three consecutive measurements exceed the threshold before the firewall rule-base is updated.

In the above example, step S102 of the method in Fig. 2 includes determining whether the 50 milliseconds has past since the last calculation of packet ingress rate. If the interval is less than 50 milliseconds, the control returns to the initial state. In the above example, step S106 determines whether the current ingress rate exceeds the threshold and whether the ingress rate is exceeded three consecutive times, i.e., for 150 milliseconds.

The present invention recognizes differences between the design requirements for packet classification and filtering in communication appliances and classification and filtering design requirements in large network elements such as routers and switches.

The first difference is that a computer appliance legitimately sends and receives traffic to and from only a small set of IP addresses. For example, an IP-phone 12a in the H.323 network shown in Fig. 1 establishes communication channels to the MGC 14b (using RAS and H.248 protocols), the MG 14a (using RTP and RTCP protocols) and another IP phone during a call. For conference and multi-party calls, the RTP streams are directed via the gateway 14 and not to each individual IP address of each IP-phone. Other typical IP addresses that the phone might communicate with include management devices such as monitoring tool (e.g., VMON) for monitoring RTCP data and a simple network management protocol (SNMP) manager. Typical, less than a dozen well-known IP addresses ever engage in message exchanges with the IP-phone 12a. An enterprise router/switch, on the other hand, typically engages in message exchanges with a large number of IP addresses and ranges.

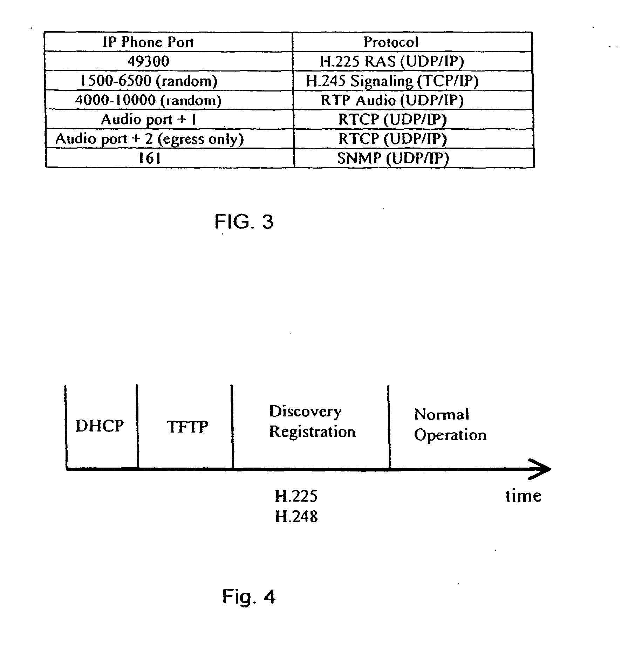

Another difference between computer appliances and network elements is that, while a computer appliance has a full-fledged IP stack, the number of protocols that the computer appliance uses is smaller than the amount of protocols used by a network element. For example, the H.323 based IP-phone 12a uses RTP, RTCP, H.323 suite, SNMP, TFTP, and HTTP protocols. The IP-phone 12a is never expected to receive IP datagrams, arbitrary UDP packets, or TCP packets not belonging to above protocols. Fig. 3 is a table showing the ports and protocols used by the IP-phone 12a. Routers and switches do not have this limited protocol usage property.

Yet a further difference between communication appliances and network elements is that communication appliances have a plurality of distinct operating states. The network element such as routers and switches do not have such distinct operating states. The IP-phone, for example, has four distinct operating states once it has booted as shown in Fig. 4. The first operating state involves dynamic host configuration protocol (DHCP) for retrieving configuration data. A second operating state includes using trivial file transfer protocol (TFTP) exchanges for updating the latest firmware and settings. When the communication device is in this state, any other communication protocol packets received may be deemed illegitimate. The third state involves H.323 discovery and registration procedure. In this state, the IP-phone 12a only communicates with the MGC 14b on well-known specific IP addresses and ports. The last state is the operational state, which can be further divided into on-hook and off-hook state. The set of IP addresses, ports and protocols used in each state are distinct. This property of the communication appliance may be used to devise reduced rule bases used in step S108 in Fig. 2.

Another important difference in the properties of communication appliances and other network elements which may be used to defend against a flooding based DoS attack in a communication appliance is the fact that the legitimate traffic rate that a communication appliance ever receives is upper bounded by a known value which is significantly less than the capacity of the network connection of the communication appliance. Continuing with our example of an IP phone, the RTP stream is the most rate intensive packets received by the IP phone in normal operation. Using the G.711 codec, packets are received at the rate of 50 frames per second assuming 20 milliseconds audio payload per packet. Accordingly, packets received at a higher rate can be determined to be illegitimate. In some cases, certain peculiarities that might be induced by network latency and jitter need to be taken into account in determining the allowable packet ingress rate.

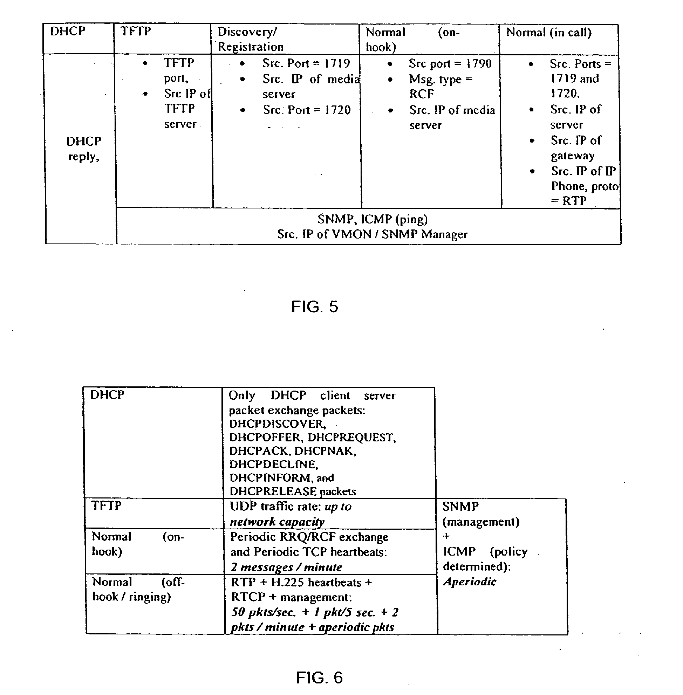

The above-described differences between communication appliances and particularly IP-phones and network elements may be used in the implementation of the general method for preventing DoS attacks at a communication appliance as disclosed by Fig. 2. The fact that a communication appliance has distinct operational states allows segmenting or partitioning of the rules in the packet-classification rule base into rule base subsets, wherein each subset includes rules that apply to a particular operating state of the communication appliance. The partitioning of the rules means that the number of rules the engine has to match at any time is significantly reduced. For example, after an IP-Phone reboots, it undergoes a DHCP and TFTP exchange sequence to get configuration data and a firmware update. During this state, only DHCP and TFTP packets should be allowed. In other words, two rules which match DHCP and TFTP protocols along with the known TFTP server IP address should suffice to discard any illegitimate packets belonging to other protocols. The following describes in detail the rule partitioning by operating state specific to an H.323 IP phone. Figure 5 shows the four distinct operational states of the IP-phone. The normal operation state of the phone is sub-divided into on-hook and off-hook states.

After the IP-phone boots and once the network stack is initialized, the IP-phone does not have an IP address (for static configured IP addresses, the DHCP phase may be bypassed). It initiates a DHCP broadcast request. In this state, the reduced rule base in step S108 of Fig. 2 deems any packet other than DHCP reply as an illegitimate packet that should be blocked. In any case, without an IP address, any IP layer communication is meaningless. A single accept rule with deny being the default would work in this state. Once the IP-phone gets an IP address via the DHCP procedure, it starts the TFTP exchange state to get the updated firmware, if any. During this state, the reduced rule base allows message related to the TFTP exchange and SNMP and ICMP queries from legitimate sources. As the IP address of the TFTP server is made known to the IP-phone in the previous DHCP exchange, the TFTP server should be the only source IP address allowed in the incoming TFTP packets. Fig. 5 discloses a table summarizing the different reduced rules list (ports, protocols) related to each of the distinct states of the IP-phone which are to be implemented by step S108.

The determination of the threshold for the ingress packet rate in step S104 of Fig. 2 may be based on the difference between the core function of firewalls in routers, switches and of firewalls embedded firewalls in communication appliances. The primary function of the former is to block unwanted traffic while maximizing throughput of legitimate network packets up to the capacity limit. In the latter case, however, while the requirement of blocking illegitimate packets is the same, maximizing throughput up to the network capacity is not an issue because, as described above, the legitimate traffic rate at which a communication appliance receives packets is smaller than the capacity of the network connection to the communication appliance.

Continuing with the example of an IP-phone, the most network intensive traffic the IP-phone receives during normal operation is RTP packets during a call. If the G.711 codec is being used with 160 byte packets, the data bandwidth of the RTP stream is 64 kbps. Assuming 20 millisecond audio per packet, this translates to 87.2 kbps at the Ethernet layer. This is more than two orders of magnitude lower than the capacity of the full-duplex 10 Mbps Ethernet port of the IP-phone. Therefore, if the packet ingress rate at the IP-phone exceeds the 87.2 kbps rate, some packets have to be illegitimate. In other words, packet ingress rate monitoring is a strong measure for intrusion detection.

The table in Fig. 6 shows the expected average ingress rate encountered by an IP-phone during various states of operation. As seen from the table, in each of the operating states, except the TFTP exchange, the average maximum ingress packet rate expected is significantly smaller than the network capacity of 10 Mbps. When a rate which exceeds the average maximum ingress rate is measured, the rule base may be reduced as described above such that only critical packets are allowed to pass while the rest of the packets are dropped (the determination of critical packets is discussed in detail above). In the normal off-hook state of the phone, for example, H.225 heartbeats between the IP-phone and the media server are deemed critical to avoid timeouts and re-registration cycles. Similarly, in the on-call state of the phone, RTP and RTCP traffic in addition to H.225 heartbeats are deemed critical. The criticality of packets is a policy decision which involves a trade-off between packet classification speed and the number of rules. If a higher number of rules are configured, by allowing more types of traffic (such as SNMP get, ICMP in addition to H.225 and RTP), the packet processing will take longer. The DoS resilience will be lowered in the sense that the CPU bottleneck will affect legitimate packet processing at a lower traffic rate. Since the CPU does not have enough power to process a large number of rules at high packet rates, some of the legitimate traffic must be curtailed by implementing a substantial reduction in the number of firewall rules that are needed for packet classification while the DoS attack is in progress. The DoS attack is detected by the ingress rate exceeding the expected maximum. How much and what kind of traffic should be allowed is a policy matter which is configured by the system administrators. The system administrators, in tum, determine the priority and amount based on business goals and the available CPU capacity of the appliance. Once the policy is specified, and the monitored rate exceeds the known upper bound, step S106, the rules are updated to reflect the policy, step S108. The rate monitoring is continued, step S110. Once the ingress rate falls below the upper bound, step S112, the rule-base is updated again to the original rule base, step S114, to allow all legitimate traffic and not just the critical.

As explained above, the upper-bound for comparison purposes needs to be carefully determined by the system administrators. The factors which affect this value include the state of the appliance, whether the traffic is periodic or non-periodic, whether features such as silence suppression are used, the inherent packet rate as transmitted by the sender, and network (in-transit) latency and jitter. All but the last of these factors have a deterministic effect on the traffic volume as seen at the ingress port of the computer appliance. Network latency, jitter and loss, on the other hand can introduce random queuing and loss at various points while the packets are in transit resulting in variable arrival rate of otherwise periodic traffic such as RTP. It is possible that substantial congestion in-transit leads to excessive queuing. Under pathological conditions, it is also possible that quick clearing of these packets would lead to their arrival at the end-point in a short duration creating an artificially high arrival rate.

The following describes an additional method for reducing the effects of DoS attacks. As described above, a communication appliance (i.e., terminal or end-point) performs specific specialized tasks carried out by a small set of protocols. The message exchanges between the appliance and media gateways and servers and the end-points themselves often involve "request-reply" type of messages; which are characterized by one-to-one pairing. A specific class of DoS attack involves sending gratuitous replies when no request has been issued. In many cases, the behavior of the communication appliance upon such a reply is unspecified and is implementation dependent. A classic exploit against VolP systems is the sending of "gratuitous address resolution protocol (ARP) replies", where the Media Access Control (MAC) address for any IP address is changed to the one of the attacker. Upon receiving the "ARP reply", the communication appliance updates its ARP tables resulting in call-hijacking or the phone not being able to communicate with the media-server.

The present invention implements a message pairing rule, in which, the communication appliance effectively ignores any gratuitous replies for which it did not issue a corresponding request. Other examples request-reply messages include DHCP request-reply, and gatekeeper request-gatekeeper confirmation (GRQ-GCF) in the H.323 suite. According to this embodiment, the firewall of the communication appliance stores a list of requests which are unanswered. This list may be stored as part of the packet classification rule base. Upon receiving a packet containing a reply, the communication appliance determines whether the reply corresponds to any of the unanswered requests. If the reply corresponds to one of the unanswered requests, the reply is forwarded to the communication appliance. Otherwise, the reply is discarded.

Thus, while there have shown and described and pointed out fundamental novel features of the invention as applied to a preferred embodiment thereof, it will be understood that various omissions and substitutions and changes in the form and details of the devices illustrated, and in their operation, may be made by those skilled in the art without departing from the scope of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A method for preventing or limiting the effects of denial-of-service attacks in a Voice over Internet Protocol, VoIP, device (12) having a packet-classifcation rule base (26) which allows all legitimate packets to be forwarded to the VoIP device (12), the method comprising the step of:
monitoring incoming packets to the VoIP device (12) to determine whether conditions indicating a denial-of-service attack are present; **characterised in that** the method further comprises the step of:
selecting a rule base subset of the packet-classification rule base from a plurality of rule base subsets based on a current one of a plurality of operating states of the VoIP device when the conditions indicating a denlal-of-service attack are determined to be present.

2. The method of claim 1, wherein the step of monitoring incoming packets to the VoIP device to determine whether conditions indicating a denial-of-servlce request are present includes determining whether a rate of Ingress exceeds a threshold rate for a predetermined time period, or for a predetermined number of consecutive times, and wherein said method further comprises the step of checking the rate of ingress of packets at periodic intervals.

3. The method of claim 2, and wherein the threshold rate is variable based on a current operating state of the VoIP device.

4. The method of claim 1, wherein the selected rule based subset is smaller than the packet-classification rule base.

5. The method of claim 1, wherein the selected subset rule-base allows only critical packets to be forwarded to the communication appliance when the conditions indicating a denial-of-service attack are determined to be present and based on the protocols used during each of the operating states, wherein the rule-base subsets include rules rejecting gratuitous replies, and wherein the first packet-classification rule base include rules rejecting gratuitous replies.

6. An apparatus for preventing or limiting the effects of denial-of-service attacks in a VoIP device comprising a firewall (24) arranged and configured for monitoring incoming packets to the VoIP device (12) to determine whether conditions indicating a denial-of-service attack are present, **characterised by** being further arranged and configured for selecting a rule base subset from a plurality of rule base subsets (26) in a packet-classification rule base based on a current one of a plurality of operating states of the VoIp device (12) when the conditions indicating a denlal-of-service attack are determined to be present.

7. The apparatus of claim 6, further comprising the packet-classification rule base, wherein the packet-classification rule base is arranged in said VoIP device and is connected to said VoIp device through a communication network.

8. The apparatus of claim 6, wherein said firewall is arranged and configured for determining whether a packet rate of ingress exceeds a threshold rate for a predetermined time period.

9. The apparatus of claim 6, wherein said firewall is arranged and configured for checking the rate of ingress of packets at periodic intervals or for determining whether a rate of ingress exceeds a threshold rate a predetermined number of consecutive times.

10. The apparatus of claim 8, wherein the threshold rate is variable based on a current operating state of the communication appliance.

11. The apparatus of claim 10, wherein the threshold rate is further dependent on whether the received traffic is periodic.

12. The apparatus of claim 10, wherein the threshold rate is further dependent on features used by the VoIP device or on an inherent packet rate transmitted by the sender, and wherein the threshold rate is further dependent on network latency and jitter.

13. The apparatus of claim 6, wherein the selected rule base subset is smaller than the packet-classification rule base.

14. The apparatus of claim 6, wherein the selected subset rule base allows only critical packets to be forwarded to the VoIP device when the conditions indicating a denial-of-service attack are determined to be present.

15. The apparatus of claim 14, wherein the rule base subsets include rules allowing only critical packets to be forwarded to the VoIP device based on the protocols used during each of the operating states,

16. The apparatus of claim 14, wherein the rule-base subsets include rules rejecting gratuitous replies.

## Patentansprüche

1. Verfahren, um die Auswirkungen von Denial-of-Service Angriffen in einem Voice over Internet Protocol, VoIP, -Gerät (12) mit einem Paketklassifizierungsregelsatz (26), der die Weiterleitung legitimer Pakete zum VolP-Gerät (12) erlaubt, zu verhindern oder zu beschränken, wobei das Verfahren folgenden Schritt umfasst:
Überwachen beim VolP-Gerät (12) eingehender Pakete, um zu ermitteln, ob auf einen Denial-of-Service Angriff hinweisende Bedingungen vorliegen; **dadurch gekennzeichnet, dass** das Verfahren des Weiteren folgenden Schritt umfasst:
Auswahl einer Regelsatzuntergruppe des aketklassifizierungsregelsatzes aus mehreren, auf einem aktuellen der mehreren Betriebszustände des VolP-Gerätes basierenden Regelsatzuntergruppen, wenn ermittelt wird, dass auf einen Denial-of-Service Angriff hinweisende Bedingungen vorliegen.

2. Verfahren nach Anspruch 1, wobei der Schritt des Überwachens beim VolP-Gerät eingehender Pakete, um zu ermitteln, ob auf einen Denial-of-Service Angriff hinweisende Bedingungen vorliegen, auch das Ermitteln umfasst, ob eine Eindringrate für einen vorgegebenen Zeitraum oder eine vorgegebene Anzahl von aufeinanderfolgenden Malen einen vorgegebenen Schwellwert übersteigt, und wobei das Verfahren des Weiteren das periodische Überprüfen der Eindringrate von Paketen umfasst.

3. Verfahren nach Anspruch 2, wobei der Schwellwert eine auf dem derzeitigen Betriebszustand des VolP-Gerätes basierende Variable ist.

4. Verfahren nach Anspruch 1, wobei die ausgewählte Regelsatzuntergruppe kleiner ist als der Paketklassifizierungsregelsatz.

5. Verfahren nach Anspruch 1; wobei die ausgewählte Regelsatzuntergruppe nur die Weiterleitung von kritischen Paketen an das Kommunikationsgerät erlaubt, wenn die auf einen Denial-of-Service Angriff hinweisenden Bedingungen vorhanden sind, und basierend auf den während jedem der Betriebszustände angewendeten Protokollen, wobei die Regelsatzuntergruppe das Abweisen überflüssiger Antworten umfasst, und der erste Paketklassifizierungsregelsatz das Abweisen überflüssiger Antworten einschließt.

6. Vorrichtung, um die Auswirkungen von Denial-of-Service Angriffen in einem Voice over Internet Protocol, VoIP, -Gerät zu verhindern oder zu beschränken, umfassend eine zur Überwachung am VolP-Gerät (12) eingehender Pakete angeordnete und konfigurierte Firewall (24), um zu ermitteln, ob auf einen Denial-of-Service Angriff hinweisende Bedingungen vorliegen, **dadurch gekennzeichnet, dass** sie des Weiteren zur Auswahl einer Regelsatzuntergruppe aus mehreren Regelsatzuntergruppen (26) in einem Paketklassifizierungsregelsatz angeordnet und konfiguriert ist, basierend auf einen aktuellen aus mehreren Betriebszuständen des VolP-Gerätes (12), wenn auf einen Denial-of-Service Angriff hinweisende Bedingungen festgestellt werden.

7. Vorrichtung nach Anspruch 6, des Weiteren den Paketklassifizierungsregelsatz umfassend, wobei der Paketklassifizierungsregelsatz im VolP-Gerät angeordnet und an das VolP-Gerät über ein Kommunikationsnetzwerk angeschlossen ist.

8. Vorrichtung nach Anspruch 6, wobei die Firewall dazu angeordnet und konfiguriert ist, zu ermitteln, ob eine Eindringrate der Pakete für einen vorgegebenen Zeitraum einen vorgegebenen Schwellwert übersteigt.

9. Vorrichtung nach Anspruch 6, wobei die Firewall dazu angeordnet und konfiguriert ist, die Eindringrate von Paketen in periodisch zu überprüfen, oder zu ermitteln, ob die Eindringrate eine vorgegebene Anzahl an aufeinanderfolgenden Malen einen vorgegebenen Schwellwert übersteigt.

10. Vorrichtung nach Anspruch 8, wobei der Schwellwert eine auf dem derzeitigen Betriebszustand des Kommunikationsgeräts basierende Variable ist.

11. Vorrichtung nach Anspruch 10, wobei der Schwellwert des Weiteren davon abhängt, ob der empfangene Verkehr periodisch ist.

12. Vorrichtung nach Anspruch 10, wobei der Schwellwert des Weiteren von vom VolP-Gerät eingesetzten Funktionen oder davon abhängig ist, ob vom Sender eine inhärente Paketrate übertragen wird, und wobei der Schwellwert des Weiteren von Netzwerklatenz und -Jitter abhängig ist.

13. Vorrichtung nach Anspruch 6, wobei die ausgewählte Regelsatzuntergruppe kleiner ist als der Paketklassifizierungsregelsatz.

14. Vorrichtung nach Anspruch 6, wobei die ausgewählte Regelsatzuntergruppe nur die Weiterleitung kritischer Pakete an das VolP-Gerät zulässt, wenn auf einen Denial-of-Service Angriff hinweisende Bedingungen festgestellt werden.

15. Vorrichtung nach Anspruch 14, wobei the Regelsatzuntergruppen Regeln beinhalten, die nur das Weiterleiten von kritischen Paketen an das VolP-Gerät basierend auf den während jedes der jeweiligen Betriebszustände angewandten Protokolls zulassen.

16. Vorrichtung nach Anspruch 14, wobei die Regelsatzuntergruppen Regeln zum Abweisen überflüssiger Antworten umfassen.

## Revendications

1. Procédé permettant d'empêcher ou de limiter les effets des attaques de déni de service dans un dispositif de voix sur IP, VolP, (12) ayant une base de règles de classification des paquets (26) qui permet de transmettre tous les paquets légitimes au dispositif VoIP (12), le procédé comportant l'étape consistant à :
surveiller les paquets entrants en direction du dispositif VoIP (12) pour déterminer si des conditions indiquant une attaque de déni de service sont présentes ;
**caractérisé en ce que** le procédé comporte par ailleurs l'étape consistant à :
sélectionner un sous-ensemble de base de règles de la base de règles de classification des paquets parmi une pluralité de sous-ensembles de base de règles en fonction d'un état en cours d'une pluralité d'états de fonctionnement du dispositif VoIP quand les conditions indiquant une attaque de déni de service sont déterminées comme étant présentes.

2. Procédé selon la revendication 1, dans lequel l'étape consistant à surveiller les paquets entrants en direction du dispositif VoIP pour déterminer si des conditions indiquant une demande de déni de service sont présentes comprend déterminer si un taux d'entrée dépasse un taux de seuil pour une période de temps prédéterminée, ou pour un nombre prédéterminé de fois consécutives, et dans lequel ledit procédé comporte par ailleurs l'étape consistant à vérifier le taux d'entrée des paquets à des intervalles périodiques.

3. Procédé selon la revendication 2, et dans lequel le taux de seuil est variable en fonction d'un état de fonctionnement en cours du dispositif VoIP.

4. Procédé selon la revendication 1, dans lequel le sous-ensemble de base de règles sélectionné est plus petit que la base de règles de classification des paquets.

5. Procédé selon la revendication 1, dans lequel la base de règles du sous-ensemble sélectionné permet de transmettre uniquement des paquets critiques à l'appareil de communication quand les conditions indiquant une attaque de déni de service sont déterminées comme étant présentes et en fonction des protocoles utilisés au cours de chacun des états de fonctionnement, dans lequel les sous-ensembles de base de règles comprennent des règles rejetant les réponses gratuites, et dans lequel la première base de règles de classification des paquets comprend des règles rejetant les réponses gratuites.

6. Appareil permettant d'empêcher ou de limiter les effets des attaques de déni de service dans un dispositif VoIP, comportant un coupe-feu (24) arrangé et configuré pour surveiller les paquets entrants en direction du dispositif VoIP (12) pour déterminer si les conditions indiquant une attaque de déni de service sont présentes, **caractérisé en** étant par ailleurs arrangé et configuré pour sélectionner un sous-ensemble de base de règles parmi une pluralité de sous-ensembles de base de règles (26) dans une base de règles de classification des paquets en fonction d'un état en cours d'une pluralité d'états de fonctionnement du dispositif VoIP (12) quand les conditions indiquant une attaque de déni de service sont déterminées comme étant présentes.

7. Appareil selon la revendication 6, comportant par ailleurs la base de règles de classification des paquets, dans lequel la base de règles de classification des paquets est arrangée dans ledit dispositif VoIP et est connectée audit dispositif VoIP par le biais d'un réseau de communication.

8. Appareil selon la revendication 6, dans lequel ledit coupe-feu est arrangé et configuré pour déterminer si un taux d'entrée de paquets dépasse un taux de seuil pour une période de temps prédéterminée.

9. Appareil selon la revendication 6, dans lequel ledit coupe-feu est arrangé et configuré pour vérifier le taux d'entrée des paquets à des intervalles périodiques ou pour déterminer si un taux d'entrée dépasse un taux de seuil un nombre prédéterminé de fois consécutives.

10. Appareil selon la revendication 8, dans lequel le taux de seuil est variable en fonction d'un état de fonctionnement en cours de l'appareil de communication.

11. Appareil selon la revendication 10, dans lequel le taux de seuil est par ailleurs dépendant du fait que le trafic reçu est périodique.

12. Appareil selon la revendication 10, dans lequel le taux de seuil est par ailleurs dépendant d'entités utilisées par le dispositif VoIP ou d'un taux de paquets inhérents transmis par l'expéditeur, et dans lequel le taux de seuil est par ailleurs dépendant de la latence et de la gigue du réseau.

13. Appareil selon la revendication 6, dans lequel le sous-ensemble de base de règles sélectionné est plus petit que la base de règles de classification des paquets.

14. Appareil selon la revendication 6, dans lequel la base de règles du sous-ensemble sélectionné permet de transmettre uniquement des paquets critiques au dispositif VoIP quand les conditions indiquant une attaque de déni de service sont déterminées comme étant présentes.

15. Appareil selon la revendication 14, dans lequel les sous-ensembles de base de règles comprennent des règles permettant de transmettre uniquement des paquets critiques au dispositif VoIP en fonction des protocoles utilisés au cours de chacun des états de fonctionnement.

16. Appareil selon la revendication 14, dans lequel les sous-ensembles de base de règles comprennent des règles rejetant les réponses gratuites.
